# EUROPEAN PATENT APPLICATION

(11) **EP 4 325 606 A1**
(43) Date of publication of application: **21.02.2024**
(21) Application number: 21839811.3
(22) Date of filing: 15.04.2021
(51) Int. Cl.: H01M 8/0232, H01M 8/021, H01M 8/0273, H01M 8/10

(54) **FUEL CELL, AND METHOD FOR MANUFACTURING FUEL CELL**

(71) Applicant: NISSAN MOTOR CO., LTD., Yokohama-shi, Kanagawa 221-0023 (JP)
(72) Inventor: SHIOMI, Takeshi, Atsugi-shi, Kanagawa 243-0123 (JP)
(74) Representative: Grünecker Patent- und Rechtsanwälte PartG mbB
(86) International application number: PCT/JP2021/015642
(87) International publication number: WO 2022/219791

(57) **Abstract**

A fuel cell having a plurality of power generating cells stacked in a thickness direction via an interconnector, the power generating cells comprising a solid electrolyte plate, an anode electrode disposed on one side of the solid electrolyte plate, and a cathode electrode disposed on the other side of the solid electrolyte plate, the interconnector electrically connecting the anode electrode and the cathode electrode, the anode electrode and the cathode electrode having a support layer configured of metal, and the support layer of any one of the anode electrode and the cathode electrode being bonded to the interconnector by welding, and the support layer of the other one of the anode electrode and the cathode electrode being metallic bonded to the interconnector by a method other than welding.

## Description

### TECHNICAL FIELD

The present invention relates to a fuel cell and a manufacturing method of a fuel cell.

### BACKGROUND ART

JP2006-236989A discloses a fuel cell that stacks a plurality of single cells via an interconnector configured of ferritic stainless steel, which cells have a solid electrolyte layer, a fuel electrode layer formed on one side of the solid electrolyte layer, an air electrode layer formed on the other side of the solid electrolyte layer, and base substrates made from metal that support the electrode layers.

### SUMMARY OF INVENTION

As in the document described above, in repetitively stacking single cells having a metal base substrate on both sides via the interconnector, there occurs a restriction in the method when stacking, that is to say, the bonding method for the interconnector and the metal base substrate. In regards to this bonding method, the aforementioned document describes that the bonding method may be sintering using a metal powder paste, brazing, or welding. However, if one side of the interconnector is welded to its opposing metal base substrate, it is impossible to weld the other side of the interconnector to their opposing metal base substrate. This is because a welding device cannot access a contacting portion between the other side of the interconnector and the metal base plate.

Namely, the fuel cell described in the aforementioned document has room for improvement in terms of an implementable bonding method and reducing electrical resistance at a bonded portion.

Accordingly, an object of the present invention is to provide a fuel cell capable of reducing electrical resistance or the like and which uses an implementable bonding method, and a manufacturing method thereof.

According to one embodiment of the present invention, a fuel cell having a plurality of power generating cells stacked in a thickness direction via an interconnector is provided. The power generating cells comprising a solid electrolyte plate, an anode electrode disposed on one side of the solid electrolyte plate, and a cathode electrode disposed on the other side of the solid electrolyte plate. The interconnector electrically connects the anode electrode and the cathode electrode. The anode electrode and the cathode electrode have a support layer configured of metal, and the support layer of any one of the anode electrode and the cathode electrode is bonded to the interconnector by welding, and the support layer of the other one of the anode electrode and the cathode electrode is metallic bonded to the interconnector by a method other than welding.

According to one other embodiment of the present invention, a manufacturing method of a fuel cell having a plurality of power generating cells stacked in a thickness direction via an interconnector is provided. The power generating cells comprise a solid electrolyte plate, an anode electrode disposed on one side of the solid electrolyte plate, and a cathode electrode disposed on the other side of the solid electrolyte plate. The anode electrode and the cathode electrode have a support layer configured of metal. The interconnector electrically connects the anode electrode and the cathode electrode. In this method, power generating units are formed by welding the support layer of the cathode electrode and the interconnector, and the interconnector of one of the power generating units is metallic bonded with the support layer of the anode electrode of the other one of the power generating units by a method other than welding.

### BRIEF DESCRIPTION OF DRAWINGS

FIG. 1 is an exploded perspective view of a power generating unit according to a first embodiment.
FIG. 2 is an exploded perspective view of a portion in which power generating units of FIG. 1 are stacked.
FIG. 3A is a cross-sectional view of a state in which power generating units of FIG. 1 are stacked.
FIG. 3B is a cross-sectional view of another example of a state in which power generating units of FIG. 1 are stacked.
FIG. 4 is a view illustrating a relationship between bonding strength and bonding temperature for each bonding member.
FIG. 5 is an enlarged view of a welded portion.
FIG. 6 is a view illustrating a relationship between input energy at a time of welding and a clearance from a tip of the welded portion to an electrode.
FIG. 7 is an exploded perspective view of a power generating unit according to a modification.
FIG. 8 is an exploded perspective view of a portion in which the power generating unit of FIG. 7 is stacked.
FIG. 9A is a cross-sectional view of a bonded portion of an interconnector and an anode support layer according to the modification.
FIG. 9B is an enlarged view of region A in FIG. 9A.
FIG. 9C is an enlarged view of region B in FIG. 9A.
FIG. 10 is a cross-sectional view of a power generating unit in a stacked state, according to a second embodiment.

### DESCRIPTION OF EMBODIMENTS

An embodiment of the present invention will be described below with reference to the drawings.

### [First Embodiment]

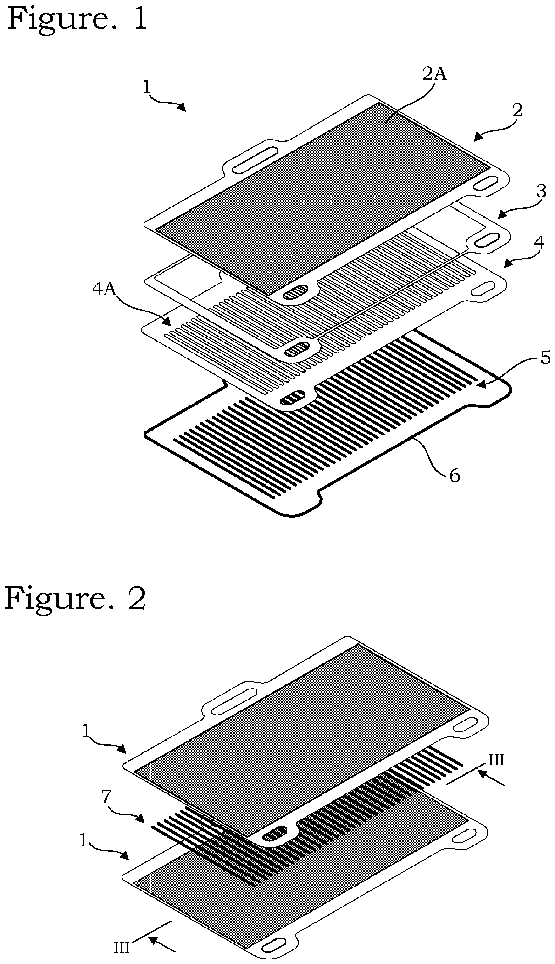

FIG. 1 is an exploded perspective view of a power generating unit 1 that configures a power generating module of a solid oxide fuel cell (hereinafter, may be referred simply as "fuel cell") according to the present embodiment.

The power generating unit 1 includes a power generating cell 2, a cell frame 3 that supports an outer edge portion of the power generating cell 2, and an interconnector 4 being welded to an active area 2A of the power generating cell 2 and the cell frame 3. In the present embodiment, laser welding is used as the welding method, however it is not limited to this.

The power generating cell 2 includes a membrane electrode assembly 2C that forms an anode electrode on one side of a solid electrolyte plate and a cathode electrode on the other side thereof, a cathode support layer 2B supporting the cathode electrode, and an anode support layer 2D supporting the anode electrode. The cathode support layer 2B and the anode support layer 2D are each formed of metal, for example ferritic stainless steel.

The interconnector 4 is configured of ferritic stainless steel containing aluminum (hereinafter, also called AL-contained FSS), and a part opposing an active area 2A of the power generating cell 2 is processed so as to have a wave form cross sectional shape. Hereinafter, this portion in the wave form is called wave form portion 4A.

The interconnector 4 has a crest portion of the wave form portion 4A welded to the power generating cell 2, and an outer edge portion welded to the cell frame 3. The welded portion of the wave form portion 4A with the power generating cell 2 is as illustrated by welding lines 5 in FIG. 1. The welded portion of the outer edge portion and the cell frame 3 encircles all of the welding lines 5 as illustrated by a peripheral welding line 6 in FIG. 1.

FIG. 2 is an exploded perspective view of a portion in which two power generating units 1 are stacked.

The two power generating units 1 are stacked by metallic bonding the interconnector 4 of one of the power generating units 1 to the power generating cell 2 of the other one of the power generating units 1 in a method other than welding, for example by diffusion bonding using a metal bonding member 7 or by brazing. That is to say, the interconnector 4 has a function to electrically connect adjacent anode electrodes and cathode electrodes. In a case of stacking even more power generating units 1, the power generating units 1 are similarly metallic bonded by diffusion bonding or the like. The reason why welding is not used as the method for bonding the power generating units 1 is because a welding device cannot access contacting portions of the interconnector 4 with the power generating cell 2 in a state in which the power generating units 1 are in contact with each other.

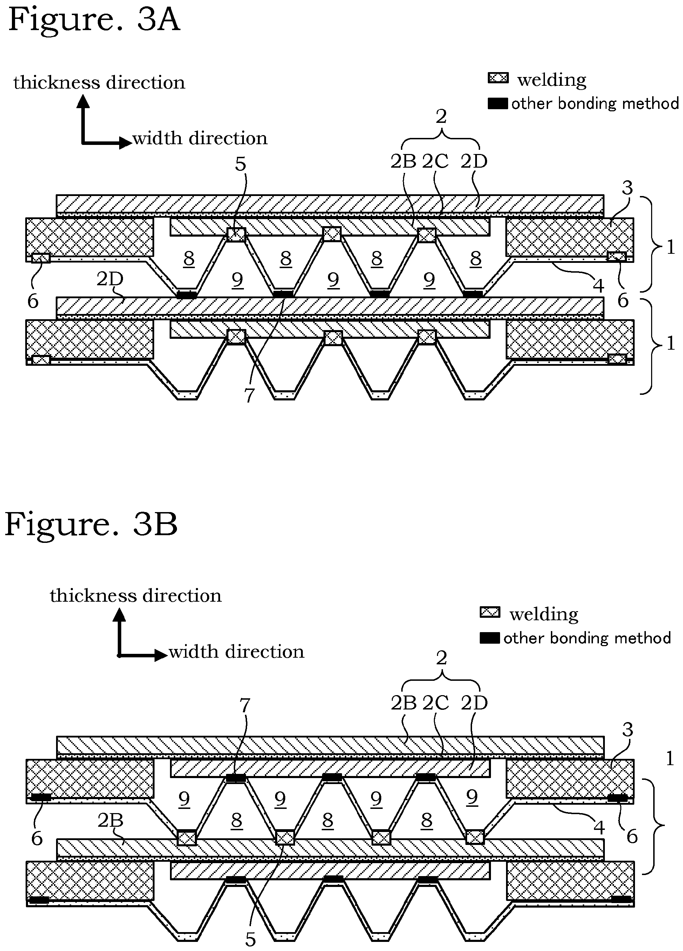

FIG. 3A is a view schematically illustrating a cross section along line III-III in FIG. 2. In FIG. 3A, for simplicity, the number of crests and troughs in the wave form portion 4A are made fewer as compared to FIGs. 1 and 2. Moreover, in this embodiment, the power generating unit 1 is one in which the interconnector 4 is welded to the cathode support layer 2B of the power generating cell 2 and to the cell frame 3.

The crest portions of the interconnector 4 are welded to the cathode support layer 2B. This forms spaces surrounded by one side of the interconnector 4 and the cathode support layer 2B. These spaces are to be a cathode channel 8 serving as a first reactant gas channel. On the other hand, the trough portions of the interconnector 4 are metallic bonded to the anode support layer 2D of the other power generating unit 1 by diffusion bonding using bonding members 7, brazing, or the like. This forms spaces surrounded by the other side of the interconnector 4 and the anode support layer 2D. These spaces are to be an anode channel 9 serving as a second reactant gas channel. That is to say, the interconnector 4 also serves as a partition defining the cathode channel 8 and the anode channel 9.

According to the above configuration, electric current flows from the anode electrode of the lower power generating unit 1 in the drawing to the cathode electrode of the upper power generating unit 1 in the drawing, via the interconnector 4.

FIG. 3B is a view schematically illustrating another example of a cross section along line III-III in FIG. 2. FIG. 3B differs from FIG. 3A in positions of the cathode support layer 2B and the anode support layer 2D with respect to the membrane electrode assembly 2C, and that the trough portions of the interconnector 4 are welded to the cathode support layer 2B. Accompanying these differences, a portion equivalent to the peripheral welding line 6 in FIG. 3A is not welded, and is metallic bonded by diffusion bonding using the bonding members 7, brazing, or the like. Moreover, the positions of the anode channel 9 and the cathode channel 8 are also opposite of FIG. 3A.

Next describes the effects achieved by employing the above configuration.

In regards to the configuration of stacking the power generating cells 2 via the interconnector 4, there is an issue as to how to reduce the electrical resistance between the interconnector 4 and the power generating cells 2. Regarding this, in the present embodiment, welding is used for the bonding with one of the power generating cells 2, and a method other than welding, for example diffusion bonding using the bonding members 7, brazing, or the like is used for the bonding with the other one of the power generating cells 2.

The welding is a bond by the substrates melting against each other; the support layer of the power generating cells 2 and the interconnector 4 hence directly connect electrically. Therefore, it is possible to largely reduce the electrical resistance as compared to the bond using the bonding members 7. Moreover, since the members directly connect electrically as described above, even if an oxide layer is formed on the surface of the interconnector 4 by change over time of the fuel cell, electrical continuation can be secured. Furthermore, in a bond using a metal powder paste or the like, the electrical resistance at the bonded portion will hold temperature sensitivity and hence the electrical resistance will vary depending on operating conditions of the fuel cell. However, with the bond by welding, no such problems of temperature sensitivity will occur.

In terms of reducing electrical resistance, welding is desirably used also in bonding the interconnector 4 with the other one of the power generating cells 2, however in the state in which the power generating cell 2 is welded to one side of the interconnector 4, the welding device cannot access the contacting portion of the other side of the interconnector 4 with the other one of the power generating cells 2. Therefore, welding cannot be performed. Accordingly, metal bonding by diffusion bonding using the bonding members 7 or brazing is used. According to these bonding methods, a diffusion layer is formed on an interface of the bonded portion, and hence strength of the bonded portion can be secured. As a result, even if the temperature or load varies while generating power in the fuel cell, the bonding state (namely, electrically connected state) can be more easily maintained. In other words, a situation in which the electrical resistance increases due to a change in the bonded state during power generation is difficult to occur. Metallic bonding can reduce the electrical resistance more than a bond using a non-metallic bonding member or than a configuration of simple contact.

Moreover, the case of configuring the interconnector 4 with FSS causes an issue of how to hold down corrosion of the interconnector 4.

The fuel cell reaches a high temperature during operation, and the side of the interconnector 4 forming the cathode channel 8 (also referred as a cathode side plane) is exposed to air. Therefore, the cathode side plane of the interconnector 4 can be easily oxidized by oxygen in the air. On the other hand, the side of the interconnector 4 forming the anode channel (also referred as an anode side plane) is exposed to hydrogen serving as fuel gas; oxidation by water vapor thus easily occurs. Due to these oxidations, the interconnector 4 further corrodes.

Moreover, hydrogen exhibits a property of diffusing within the interconnector 4 composed of FSS. Once the dispersed hydrogen moves within the interconnector 4 from an anode side interface to a cathode side interface, water is generated by the hydrogen coupling with the air flowing through the cathode channel 8, and this water causes corrosion (this is called Dual corrosion). The Dual corrosion occurs particularly easily in a case of the interconnector 4 being formed thin by a press mold or the like.

Other than this, corrosion may also occur due to chromium contained in FSS for corrosion resistance being transpired under high temperature conditions.

A measure for holding down the corrosion described above may include forming the interconnector 4 with FSS having an alumina layer provided on its surface. This aims to hold down the oxidation and the diffusion of hydrogen by providing an alumina layer. However, the FSS having the alumina layer on its surface cannot be welded.

In contrast, the present embodiment forms the interconnector 4 with AL-contained FSS. The AL-contained FSS has substantially no alumina present on its surface in its initial state, and hence can be welded. Furthermore, an alumina layer is formed during stacking work of the power generating units 1 or during operation of the fuel cell, on the anode side plane. This prevents the diffusion of hydrogen into the interconnector 4, which holds down the corrosion caused by the hydrogen moving to the cathode side surface layer of the interconnector 4. Furthermore, by using AL-contained FSS, oxide formation on the bonding plane is held down; this allows for securing durability. Description was provided that substantially no alumina is present on the surface of the AL-contained FSS in its initial state; if the thickness of the alumina layer on the surface of the AL-contained FSS is not more than about 50 nm, this is said as "substantially no" alumina.

Next describes the bonding members 7.

The bonding members 7 are made of metal as described above. Furthermore, the bonding members 7 desirably contain at least one of nickel or copper. The reason for this is as described below.

In the present embodiment, the bonding members 7 are used in bonding the anode support layer 2D to the interconnector 4, and hence are exposed to fuel gas (hydrogen) that flows through the anode channel 9. However, nickel and copper exhibit properties of being difficult to form aluminum oxide in a hydrogen atmosphere. Therefore, if the bonding members 7 are those containing nickel or copper, it is possible to hold down the generation of aluminum oxide caused by oxygen and the aluminum contained in the anode support layer 2D and the interconnector 4. As a result, it is possible to hold down the increase in electrical resistance, including during operation of the fuel cell.

Moreover, particle diameter of the bonding members 7 prior to bonding (that is to say, at the time of bonding work) is desirably small. This is for the following reasons.

In a case in which the bonding members 7 are used to bond the power generating units 1 together to form a fuel cell stack, the fuel cell stack in a provisionally assembled state that stacks a plurality of power generating units 1 via the bonding members 7 is placed in an electric furnace or the like and the temperature is increased, to melt the bonding members 7. Moreover, metal exhibits a property that oxidation is promoted as the temperature increases. On the other hand, the bonding members 7 exhibit a property of melting at a low temperature with a smaller particle diameter. Therefore, it is possible to reduce the temperature to form the fuel cell stack with a smaller particle diameter of the bonding members 7, thus allowing to hold down the oxidation of the metal components.

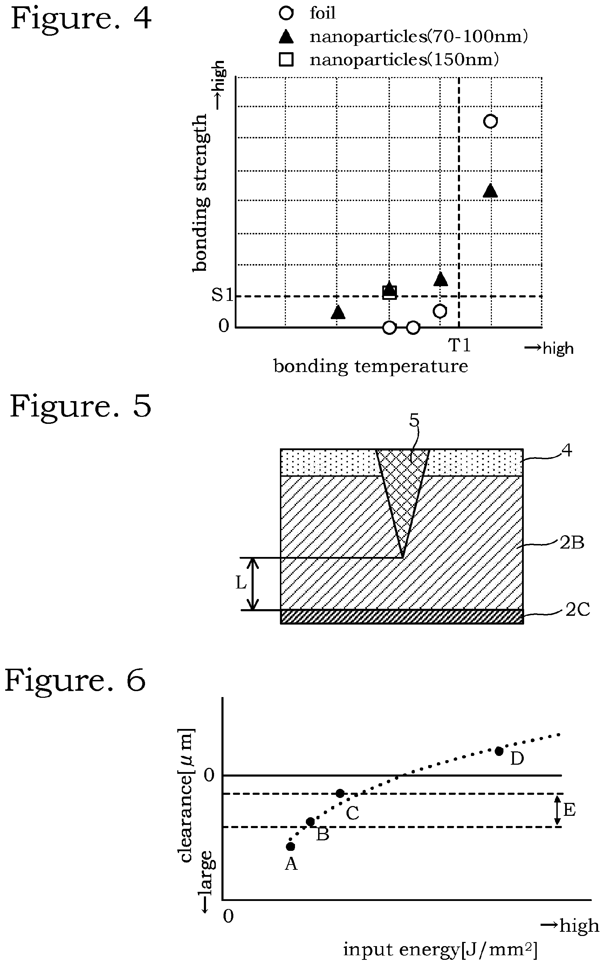

FIG. 4 is a view illustrating an experiment result examining a relationship between bonding strength and temperatures (also called bonding temperature) at the time of forming the fuel cell stack in a case in which the bonding members 7 contain nickel. The circles in the drawing illustrate a case in which the bonding members 7 are of a foil form, the triangles in the drawing illustrate a case in which the bonding members 7 are of nanoparticles (particle diameter: 70-100 nm), and the squares in the drawing illustrate a case in which the bonding members 7 are of nanoparticles (particle diameter: 150 nm).

A high bonding strength indicates that the interconnector 4 is firmly bonded to the anode support layer 2D. Namely, it is thought that the electrical resistance at the bonding portion of the interconnector 4 and the anode support layer 2D is lower with a higher bonding strength. Accordingly, a threshold of the bonding strength that can obtain an electrical resistance capable of satisfying the performance of the fuel cell is threshold S 1.

The higher the bonding temperature, the higher the bonding strength. However, the metal portions exhibit a property of being easily oxidized with a higher temperature. That is to say, if the bonding temperature is excessively high, although the bonding strength may increase, the oxidation of the metal portions become promoted at the time of bonding work. On the other hand, there is a target value (also called target operating temperature) for a temperature at the time of operating the fuel cell; the target operating temperature is around 600-650 °C, for example. Namely, if the bonding temperature is higher than the target operating temperature, this will mean that oxidation is promoted due to bonding work at a high temperature that is not reachable during operation upon completion of the fuel cell. Accordingly, an upper limit of the target operating temperature is threshold T1 of the bonding temperature.

Studying the experiment results upon consideration of the aforementioned threshold S 1 of the bonding strength and the threshold T1 of the bonding temperature, in the case of the foil, the bonding strength does not reach the threshold S1 at a bonding temperature not higher than the threshold T1. On the contrary, in the case of nanoparticles, the bonding strength reaches the threshold S1 even though the bonding temperature is not higher than the threshold T1. Therefore, the particle diameter of the bonding members 7 prior to bonding is desirably not more than 150 nm.

Next describes the bonded portion by welding.

FIG. 5 is an enlarged view of the bonded portion. The welding line 5 is formed by the interconnector 4 and the cathode support layer 2B melting. A distance from a tip in a thickness direction of this welding line 5 to the membrane electrode assembly 2C (that is to say, the cathode electrode) is clearance L.

FIG. 6 is a view illustrating a relationship between the clearance L and an input energy for the welding. The greater the input energy is, the more a melting region spreads, and the clearance L is reduced as illustrated in FIG. 6. The bonding strength increases with a smaller clearance L, however a quantity of heat that is transmitted to the cathode electrode at the time of the welding work will increase. For example, as illustrated in D of FIG. 6, if the welding line 5 reaches the cathode electrode, the cathode electrode will deteriorate by the heat. Moreover, also in a case in which the clearance L is insufficient, the cathode electrode may deteriorate by the heat. On the other hand, if the clearance L is excessively large as in A of FIG. 6, the bonding strength will be insufficient. Upon consideration of the above issues, the input energy is to be controlled so that the clearance L remains within a range (E in FIG. 6) in which the cathode electrode does not deteriorate by heat while a sufficient bonding strength is achieved. The lower limit of range E is around 50 micrometers for example, and the upper limit varies depending on the thickness of the cathode support layer.

As described above, the present embodiment provides a fuel cell in which a plurality of the power generating cells 2 is stacked in a thickness direction via the interconnector 4, the power generating cell 2 having a solid electrolyte plate, an anode electrode disposed on one side of the solid electrolyte plate, and a cathode electrode disposed on the other plane of the solid electrolyte plate, and the interconnector 4 electrically connecting the cathode electrode and the anode electrode. The anode electrode and the cathode electrode have the support layers 2B, 2D that are configured of metal, and any one of the support layer 2D of the anode electrode and the support layer 2B of the cathode electrode is welded to the interconnector 4. Moreover, the other one of the support layer 2D of the anode electrode or the support layer 2B of the cathode electrode is bonded to the interconnector 4 by a method other than welding. This accordingly allows for bonding and stacking the plurality of power generating units 1, and can reduce the electrical resistance by providing a bonded portion by welding.

In the present embodiment, the support layer 2B of the cathode electrode and the interconnector 4 are bonded by welding, and the support layer 2D of the anode electrode and the interconnector 4 are metallic bonded by a method other than welding. This allows for reducing the electrical resistance between the cathode electrode and the interconnector 4. Moreover, the bonded portion by welding (welding line 5) can secure electrical continuity even if an oxide layer is formed on the surface of the interconnector 4 by change over time of the fuel cell.

The interconnector 4 of the present invention is configured of AL-contained FSS. The AL-contained FSS has substantially no alumina present on its surface in its initial state, and hence can be welded. Furthermore, by having an alumina layer formed on the anode side plane during stacking work of the power generating units 1 or during operation of the fuel cell, it is possible to prevent the diffusion of hydrogen to within the interconnector 4, and hold down corrosion caused by the diffusion of hydrogen. Furthermore, by using AL-contained FSS, oxide formation on the bonding plane is held down; this allows for securing durability.

In the present embodiment, diffusion bonding using the bonding members 7 or brazing is used as the method other than welding. This secures the strength in the bonded portion; even if the temperature or load varies during power generation of the fuel cell, the bonded state can be maintained. That is to say, an electrically continuous state is secured.

In the present embodiment, the upper limit of the particle diameter of the bonding members 7 prior to bonding is limited to a size by which a predetermined bonding strength is obtainable when bonding at a temperature that does not cause oxidation of the cathode support layer 2B. This allows for holding down the temperature at the time of bonding work, thus allowing for holding down the oxidation of metal components.

In the present embodiment, the anode support layer 2D and the interconnector 4 are bonded using the metal bonding members 7, and these bonding members 7 contain at least one of nickel and copper. Nickel and copper exhibits a property being difficult to form aluminum oxide under a hydrogen atmosphere; according to the present embodiment, it is thus possible to hold down the generation of aluminum oxides caused by oxygen and the aluminum contained in the anode support layer 2D and the interconnector 4. As a result, it is possible to hold down the increase in electrical resistance, including during operation of the fuel cell.

### [Modification]

The following describes a modification of the present embodiment. The present modification also belongs to the scope of the present invention.

The present embodiment described the case of bonding the anode support layer 2D to the interconnector 4 by diffusion bonding or brazing. The present modification bonds these by the so-called electric current bonding. Electric current bonding is a technique of bonding metals by utilizing resistance heat generated by passing electricity to a metal component.

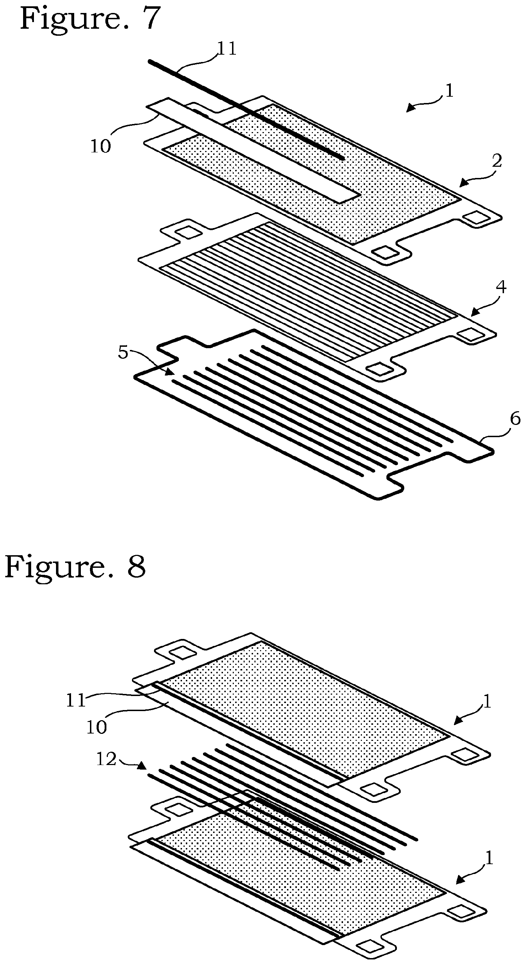

FIG. 7 is an exploded perspective view of a power generating unit 1 according to the present modification. FIG. 8 is an exploded perspective view of a portion in which two power generating units 1 are stacked. The substantial difference between FIGs. 7, 8 and FIGs. 1, 2 is that a electric current carrying tab 10 is welded to one end of the power generating cell 2. Reference number 11 in FIGs. 7 and 8 is the welding line of when the electric current carrying tab 10 is welded to the power generating cell 2. Moreover, reference number 12 in FIG. 8 illustrates the bonded portion of when bonded by the electric current bonding (also called electric current bonded portion). The number of the electric current bonding portions 12 and intervals between adjacent electric current bonding portions 12 are different from the actual products. The intervals between adjacent electric current bonding portions 12 are described later.

In the present modification, electricity is passed from the electric current carrying tab 10 to an end opposing an end of the interconnector 4 to which the electric current carrying tab 10 is welded. This heats a contacting portion of the interconnector 4 and the anode support layer 2D having a large electrical resistance prior to bonding, to bond the interconnector 4 to the anode support layer 2D. In a case of brazing or the like, the fuel cell stack in a provisionally assembled state in which the plurality of power generating units 1 are stacked as described above is placed in an electric furnace or the like to increase its temperature; hence the entire fuel cell stack increases in temperature. In other words, portions not involved in the bonding will also be increased in temperature, which would cause the metal components to oxidate more easily. In comparison, in the case of electric current bonding, it is possible to heat the bonding portion selectively. Therefore, according to the electric current bonding, electrical resistance can be reduced by metallic bonding the interconnector 4 to the anode support layer 2D while holding down the oxidation of the metal components at the time of forming work of the fuel cell stack.

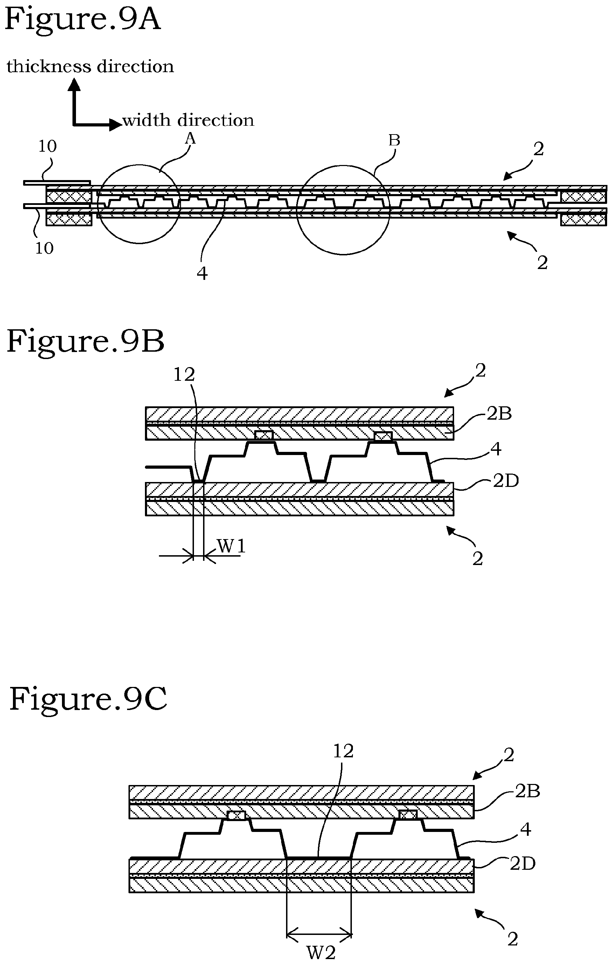

FIG. 9A is a cross-sectional view of the bonded section of the interconnector 4 and the anode support layer 2D in the present modification. FIG. 9B is an enlarged view of region A in FIG. 9A, and FIG. 9C is an enlarged view of region B in FIG. 9A. An end opposing region A is as with as in FIG. 9B.

In the present modification, a plurality of the electric current bonded portions 12 align in parallel in the width direction of the electric current bonded portions 12. Furthermore, a dimension in the width direction of the electric current bonded portions 12 at the center in the width direction (W2 in FIG. 9C) is greater than a dimension in the width direction of the electric current bonded portions 12 at both ends in the width direction (W1 in FIG. 9B). In other words, the electric current bonded portion 12 at the center in the width direction has a lower electrical resistance than the electric current bonded portions 12 at both ends in the width direction.

During operation of the fuel cell, the center portion in the width direction has a higher temperature than the end portions, and the generated current density is also greater. Therefore, according to the present modification, the configuration will have a smaller electrical resistance in the electric current bonded portion 12 at a part with greater power generating current density; this causes a uniform current flow to the entire power generating unit 1, thus allowing for reducing the electrical resistance of the entire fuel cell.

As described above, the method other than welding in the present modification is the electric current bonding that bonds a contacting portion of the interconnector 4 and the anode support layer 2D by passing electricity through the interconnector 4 and the anode support layer 2D. This allows for bonding without increasing the temperature of the entire power generating unit 1; accordingly, the effect of reducing the electrical resistance by metallic bonding can be achieved while holding down the oxidation of the metal components.

In the present modification, a plurality of the bonded portions by the method other than welding (electric current bonded portions 12) is aligned in parallel in the width direction of the electric current bonded portions 12, and the electric current bonded portion 12 at the center in the width direction has a width direction dimension greater than the electric current bonded portions 12 at both ends in the width direction. This achieves a configuration in which the electrical resistance of the electric current bonded portions 12 is lower for a part having a greater power generating current density, and thus can reduce the electrical resistance for the entire fuel cell.

### [Second Embodiment]

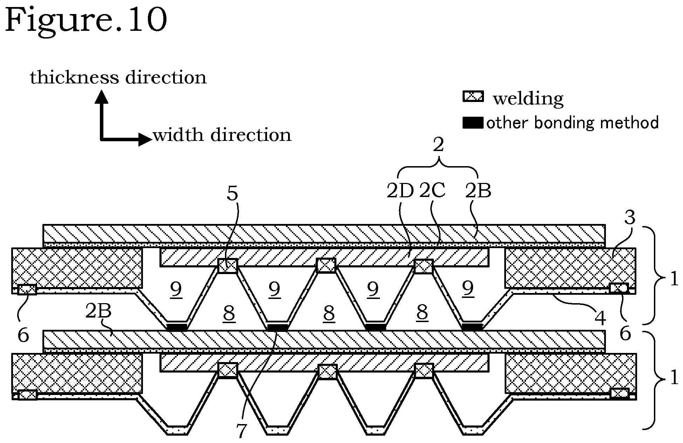

FIG. 10 is a cross-sectional view illustrating a cross section of a portion in which two power generating units 1 are stacked, as with FIG. 3 of First Embodiment. The difference from FIG. 3 is that the power generating units 1 whose interconnector 4 is welded to the anode support layer 2D and cell frame 3 are bonded via the bonding members 7. This makes a space surrounded by one side of the interconnector 4 and the anode support layer 2D be the anode channel 9 serving as the first reactant gas channel, and a space surrounded by the other side of the interconnector 4 and the cathode support layer 2B be the cathode channel 8 serving as the second reactant gas channel.

According to the above configuration, the electrical resistance between the interconnector 4 and the anode electrode is reduced largely. In other words, a current collecting resistance on an anode side can be reduced largely.

Moreover, in order for operating the fuel cell normally, there is the need to prevent hydrogen from leaking from the anode channel 9 to the cathode channel 8 or outside. According to the present embodiment, the interconnector 4 is welded to the anode support layer 2D, and simultaneously to the cell frame 3 also. Furthermore, the welding line with the cell frame 3 encircle all of the anode channel 9, as with the peripheral welding line 6 in FIG. 1. Namely, sealing of the anode channel 9 is finished at a stage of producing the power generating unit 1.

Moreover, in the present embodiment, the bonding members 7 are exposed to oxygen flowing through the cathode channel 8. Therefore, the bonding members 7 will oxidize over time. Accordingly, the present embodiment uses bonding members 7 that contain an element (for example, chromium, manganese) having a property in which electrical continuity is secured even if it is oxidized, and which can easily bond with aluminum in the adjacent interconnector 4 as aluminate. The element may be one other than chromium or manganese, as long as the element has the aforementioned properties.

As described above, the present embodiment includes the cell frame 3 that supports an outer edge of the power generating cell 2, the interconnector 4 is bonded to the support layer of the anode electrode (anode support layer 2D) and the cell frame 3 by welding, and the support layer of the cathode electrode (cathode support layer 2B) and the interconnector 4 are metallic bonded by a method other than welding. This allows for reducing the current collecting resistance on the anode side. Moreover, sealing of the anode channel 9 finishes at the stage of producing the power generating unit 1.

In the present embodiment, the cathode support layer 2B and the interconnector 4 are bonded using the metal bonding members 7, and the bonding members 7 contain at least one of cobalt or manganese. This allows for firmly bonding the cathode support layer 2B and the interconnector 4, and secures electrical continuity even if the bonding members 7 oxidize over time.

The above describes an embodiment of the present invention, however the above embodiment merely illustrates one portion of an application example of the present invention, and does not intend to limit the technical range of the present invention to the specific configurations in the above embodiment.

## Claims

1. A fuel cell having a plurality of power generating cells stacked in a thickness direction via an interconnector, the power generating cells comprising a solid electrolyte plate, an anode electrode disposed on one side of the solid electrolyte plate, and a cathode electrode disposed on the other side of the solid electrolyte plate, the interconnector electrically connecting the anode electrode and the cathode electrode,
the anode electrode and the cathode electrode having a support layer configured of metal, and
the support layer of any one of the anode electrode and the cathode electrode being bonded to the interconnector by welding, and the support layer of the other one of the anode electrode and the cathode electrode being metallic bonded to the interconnector by a method other than welding.

2. A fuel cell according to claim 1, wherein
the support layer of the cathode electrode is bonded to the interconnector by welding, and the support layer of the anode electrode is metallic bonded to the interconnector by a method other than welding.

3. A fuel cell according to claim 1, comprising:
a cell frame configured to support an outer edge of the power generating cell,
the interconnector being bonded to the support layer of the anode electrode and the cell frame by welding, and
the support layer of the cathode electrode being metallic bonded to the interconnector by a method other than welding.

4. A fuel cell according to any one of claims 1 to 3, wherein
the interconnector is configured of ferritic stainless steel containing aluminum.

5. A fuel cell according to claim 2 or 3, wherein
the method other than welding is diffusion bonding using a bonding member, or brazing.

6. A fuel cell according to claim 5, wherein
an upper limit of a particle diameter of the bonding member prior to bonding is limited to a size capable of obtaining a predetermined bonding strength when bonding at a temperature at which the support layer does not oxidate.

7. A fuel cell according to claim 2 or 3, wherein
the method other than welding is electric current bonding that bonds a contacting portion of the interconnector and the support layer by passing through electricity between the interconnector and the support layer.

8. A fuel cell according to claim 7, wherein
a plurality of bonded portions by the method other than welding is aligned in parallel in a width direction of the bonded portions, and
a width direction dimension of the bonded portions is greater in the bonded portion at a center in the width direction than the bonded portions at both ends in the width direction.

9. A fuel cell according to claim 2, wherein
the support layer of the anode electrode is bonded to the interconnector by using a metal bonding member,
the bonding member containing at least one of nickel or copper.

10. A fuel cell according to claim 3, wherein
the support layer of the cathode electrode is bonded to the interconnector by using a metal bonding member,
the bonding member containing at least one of nickel or copper.

11. A manufacturing method of a fuel cell having a plurality of power generating cells stacked in a thickness direction via an interconnector, the power generating cells comprising a solid electrolyte plate, an anode electrode disposed on one side of the solid electrolyte plate, and a cathode electrode disposed on the other side of the solid electrolyte plate, the anode electrode and the cathode electrode having a support layer configured of metal, and the interconnector electrically connecting the anode electrode and the cathode electrode, the method comprising:
forming power generating units by welding the support layer of the cathode electrode and the interconnector; and
metallic bonding the interconnector of one of the power generating units with the support layer of the anode electrode of the other one of the power generating units by a method other than welding.
